# EUROPEAN PATENT APPLICATION

(11) **EP 2 517 669 A1**
(43) Date of publication of application: **31.10.2012**
(21) Application number: 10839057.6
(22) Date of filing: 21.10.2010
(51) Int. Cl.: A61C 19/00, A61C 1/05, A61C 1/07, A61C 3/03

(54) **GRINDING CHIP**

(30) Priority: 21.12.2009 JP 2009288801
(71) Applicant: Nishikibe Seisakusho Co., Ltd, Katsushika-ku. Tokyo 124-0006 (JP)
(72) Inventor: NISHIKIBE, Masanori, Tokyo 124-0006 (JP); NISHIKIBE, Mitsuyoshi, Tokyo 124-0006 (JP)
(74) Representative: Corradini, Corrado
(86) International application number: PCT/JP2010/068629
(87) International publication number: WO 2011/077820

(57) **Abstract**

Provided is an abrasive tip with which a tip, a curette, or the like can be readily sharpened by anyone without requiring skill gained through experience. Provided is a shaft (2) that is detachably attached to an end of a handpiece of a dental ultrasonic scaler or a dental air scaler, and a flat plate (3) extending continuously from an end of the shaft (2) and having a top surface (9), a bottom surface, two side surfaces (11), and a front surface (12). An abrasive is fixed to the top surface (9), the bottom surface, the two side surfaces (11), and the front surface (12) by electrodeposition or sintering.

## Description

### Technical Field

The present invention relates to abrasive tips used for grinding tips (such as scaling tips or root planing tips) detachably attached to ends of handpieces of dental ultrasonic scalers or dental air scalers, or for grinding curettes mainly used for removing calculus from root areas of teeth or areas that are difficult to brush.

### Background Art

In the related art, these tips and curettes are generally sharpened by a so-called sharpening method as disclosed in Non Patent Citation 1.

### Non Patent Citation 1:

http://www.kojimachi-ave.com/recruit/09.html

### Disclosure of Invention

However, the so-called sharpening method requires skill gained through experience since it involves moving the tip or the curette on an abrasive stone called a sharpening stone, which is placed on a table or held steadily by hand, while constantly pressing the tip or the curette against the sharpening stone at a precise angle.

The present invention has been made in view of the circumstances described above, and an object thereof is to provide an abrasive tip with which a tip or a curette can be readily sharpened by anyone without requiring skill gained through experience.

In order to solve the aforementioned problem, the present invention employs the following solutions.
An abrasive tip according to a first aspect of the present invention includes a shaft that is detachably attached to an end of a handpiece of a dental ultrasonic scaler or a dental air scaler; and a flat plate extending continuously from an end of the shaft and having a top surface, a bottom surface, two side surfaces, and a front surface. An abrasive is fixed to the top surface, the bottom surface, the two side surfaces, and the front surface by electrodeposition or sintering.

When sharpening (grinding) a tip or a curette, the abrasive tip according to the first aspect of the present invention is attached to the end of the handpiece of the dental ultrasonic scaler and is vibrated at a frequency of about 30,000 Hz in (substantially) a normal direction to the top surface and the bottom surface of the flat plate, or is attached to the end of the handpiece of the dental air scaler and is vibrated at a frequency of about 5,000 Hz in (substantially) the normal direction to the top surface and the bottom surface of the flat plate.
Consequently, by simply pressing the top surface, the bottom surface, the side surfaces, or the front surface of the vibrating flat plate against the tip or the curette, or by simply pressing the tip or the curette against the top surface, the bottom surface, the side surfaces, or the front surface of the vibrating flat plate, the tip or the curette can be readily sharpened by anyone without requiring skill gained through experience.

In the aforementioned abrasive tip, it is more preferable that the flat plate have a thickness that gradually decreases from a base end toward a distal end.

With such an abrasive tip, the amplitude of vibration can be increased in (substantially) the normal direction to the top surface and the bottom surface of the flat plate, thereby improving the grinding rate and the working efficiency.

In the aforementioned abrasive tip, it is more preferable that the side surfaces and the front surface be curved surfaces.

With such an abrasive tip, the tip or the curette can be readily sharpened by slightly tilting the handpiece of the dental ultrasonic scaler or the dental air scaler or by slightly tilting the tip or the curette, thereby improving the workability and the working efficiency.

In the aforementioned abrasive tip, it is more preferable that the shaft and the flat plate be connected to each other such that the front surface extends away from the shaft and such that a longitudinal axis of the shaft and a longitudinal axis of the flat plate intersect to form an obtuse angle (e.g., 120 degrees).

With such an abrasive tip, the tip or the curette can be readily sharpened by slightly tilting the handpiece of the dental ultrasonic scaler or the dental air scaler or by slightly tilting the tip or the curette, thereby improving the workability and the working efficiency.

In the aforementioned abrasive tip, it is more preferable that a hole for discharging a cooling medium supplied via the handpiece of the dental ultrasonic scaler or the dental air scaler be provided in an intermediate area, in a width direction of a connection section that connects the shaft and the flat plate, located away from a boundary between the connection section and the flat plate by a predetermined distance toward the shaft.

With such an abrasive tip, since the abrasive tip is cooled by the cooling medium supplied via the handpiece of the dental ultrasonic scaler or the dental air scaler during a grinding process, a temperature increase in the abrasive tip during the grinding process can be suppressed.

An abrasive tip according to a second aspect of the present invention includes a shaft that is detachably attached to an end of a handpiece of a dental ultrasonic scaler or a dental air scaler and that includes a large-diameter section located at a base end and a small-diameter section located at a distal end and extending continuously from the large-diameter section; and a columnar section extending continuously from the distal end of the shaft. An abrasive is fixed to a surface of the columnar section by electrodeposition or sintering.

When sharpening (grinding) a tip or a curette, the abrasive tip according to the second aspect of the present invention is attached to the end of the handpiece of the dental ultrasonic scaler and is vibrated at a frequency of about 30,000 Hz in (substantially) the normal direction to an outer surface (outer peripheral surface) of the columnar section, or is attached to the end of the handpiece of the dental air scaler and is vibrated at a frequency of about 5,000 Hz in (substantially) the normal direction to the top surface and the bottom surface of the flat plate.
Consequently, by simply pressing the outer surface (outer peripheral surface) or the end surface of the vibrating columnar section against the tip or the curette, or by simply pressing the tip or the curette against the outer surface (outer peripheral surface) or the end surface of the vibrating columnar section, the tip or the curette can be readily sharpened by anyone without requiring skill gained through experience.

In the aforementioned abrasive tip, it is more preferable that the shaft and the columnar section be connected to each other such that a distal end of the columnar section extends away from the shaft and such that a longitudinal axis of the shaft and a longitudinal axis of the columnar section intersect to form an obtuse angle (e.g., 120 degrees).

With such an abrasive tip, the tip or the curette can be readily sharpened by slightly tilting the handpiece of the dental ultrasonic scaler or the dental air scaler or by slightly tilting the tip or the curette, thereby improving the workability and the working efficiency.

In the aforementioned abrasive tip, it is more preferable that an outer diameter of the small-diameter section be the same as an outer diameter of the columnar section.

With such an abrasive tip, the columnar section, prior to having the abrasive (e.g., diamond) attached (fixed) thereto by electrodeposition or sintering, can be readily fabricated by simply bending the end of the smalldiameter section, thereby improving the productivity and allowing for mass production.

In the aforementioned abrasive tip, it is more preferable that a hole for discharging a cooling medium supplied via the handpiece of the dental ultrasonic scaler or the dental air scaler be provided in an intermediate area, in a width direction of a connection section that connects the shaft and the columnar section, located away from a boundary between the connection section and the columnar section by a predetermined distance toward the shaft.

With such an abrasive tip, since the abrasive tip is cooled by the cooling medium supplied via the handpiece of the dental ultrasonic scaler or the dental air scaler during a grinding process, a temperature increase in the abrasive tip during the grinding process can be suppressed.

A dental ultrasonic scaler according to the present invention includes the abrasive tip according to one of the above aspects.

With the dental ultrasonic scaler according to the present invention, a tip or a curette can be readily sharpened by anyone without requiring skill gained through experience by simply replacing a tip detachably attached to the end of the handpiece with the abrasive tip according to one of the above aspects.

A dental air scaler according to the present invention includes the abrasive tip according to one of the above aspects.

With the dental air scaler according to the present invention, a tip or a curette can be readily sharpened by anyone without requiring skill gained through experience by simply replacing a tip detachably attached to the end of the handpiece with the abrasive tip according to one of the above aspects.

The abrasive tip according to the present invention is advantageous in that a tip or a curette can be readily sharpened by anyone without requiring skill gained through experience.

### Brief Description of Drawings

[FIG. 1] Fig. 1 is a perspective view of an abrasive tip according to an embodiment of the present invention.
[FIG. 2] Fig. 2 is a perspective view of the abrasive tip according to the embodiment of the present invention.
[FIG. 3] Fig. 3 is a left side view of the abrasive tip according to the embodiment of the present invention.
[FIG. 4] Fig. 4 is a right side view of the abrasive tip according to the embodiment of the present invention.
[FIG. 5] Fig. 5 is a front view of the abrasive tip according to the embodiment of the present invention.
[FIG. 6] Fig. 6 is a rear view of the abrasive tip according to the embodiment of the present invention.
[FIG. 7] Fig. 7 is a plan view of the abrasive tip according to the embodiment of the present invention.
[FIG. 8] Fig. 8 is a bottom view of the abrasive tip according to the embodiment of the present invention.
[FIG. 9] Fig. 9 is an enlarged left side view showing an end portion of the abrasive tip according to the embodiment of the present invention in detail.
[FIG. 10] Fig. 10 is an enlarged front view showing the end portion of the abrasive tip according to the embodiment of the present invention in detail.
[FIG. 11] Fig. 11 is a perspective view of an abrasive tip according to another embodiment of the present invention.
[FIG. 12] Fig. 12 is a left side view schematically showing the abrasive tip according to another embodiment of the present invention.

### Explanation of Reference:

- 1 :: abrasive tip
- 2:: shaft
- 3:: flat plate
- 4:: large-diameter section
- 5:: small-diameter section
- 9:: top surface
- 10:: bottom surface
- 11:: side surface
- 12:: front surface
- 13:: connection section
- 14:: boundary
- 21:: abrasive tip
- 22:: columnar section
- 23:: connection section
- 24:: boundary
- 31:: hole

### Best Mode for Carrying Out the Invention

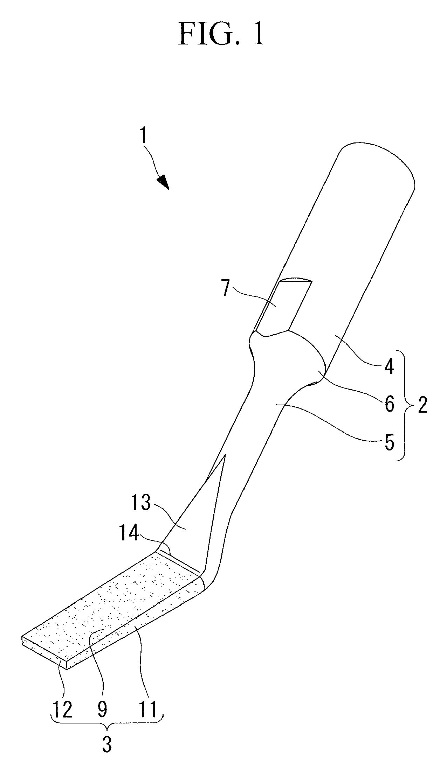

An abrasive tip according to an embodiment of the present invention will be described below with reference to Figs. 1 to 10.

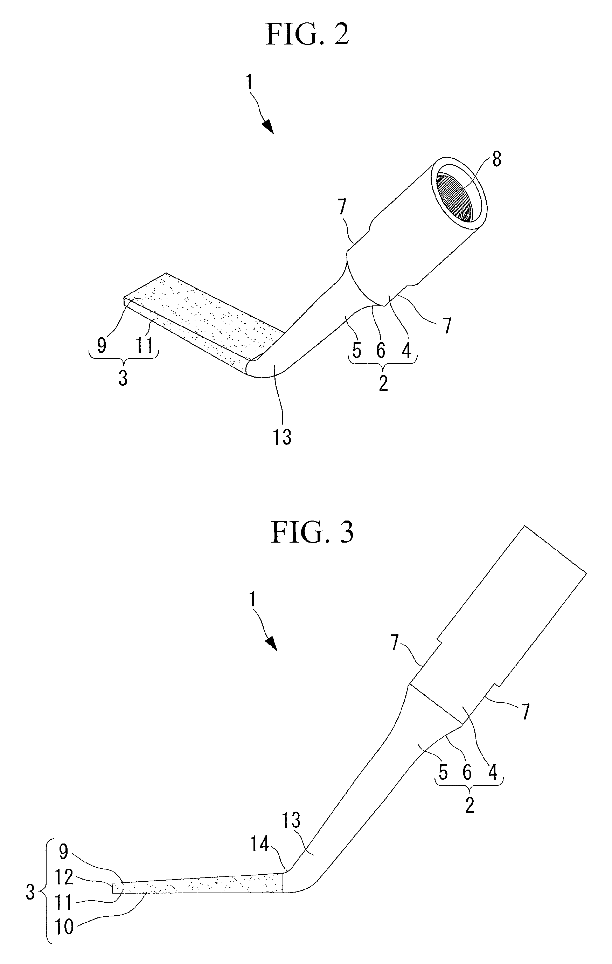

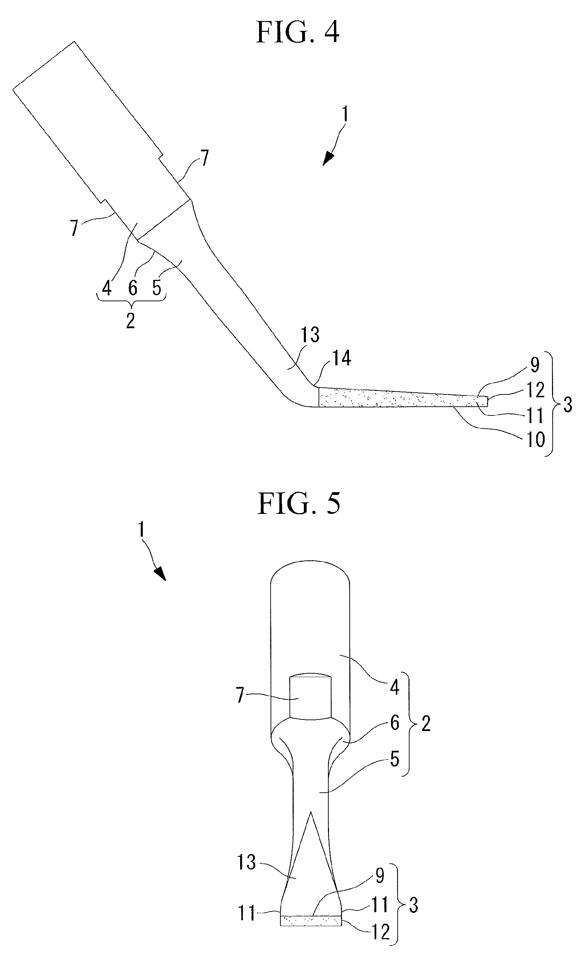

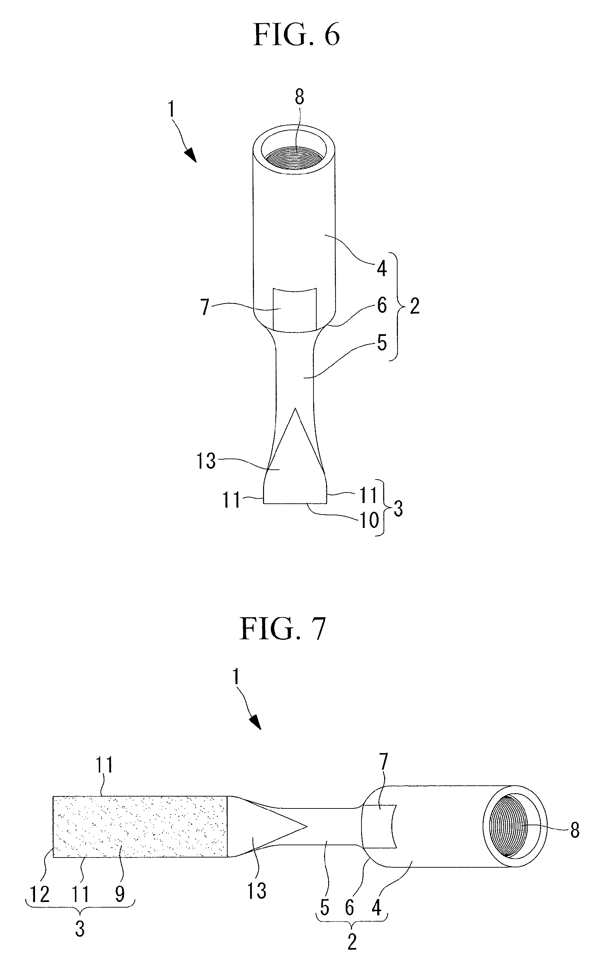

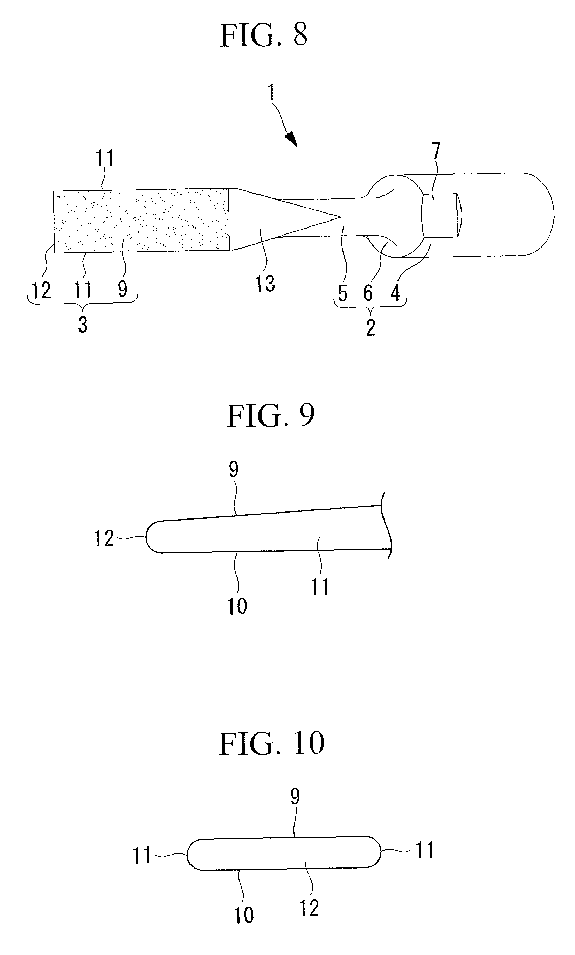

Figs. 1 and 2 are perspective views of the abrasive tip according to this embodiment. Fig. 3 is a left side view of the abrasive tip according to this embodiment. Fig. 4 is a right side view of the abrasive tip according to this embodiment. Fig. 5 is a front view of the abrasive tip according to this embodiment. Fig. 6 is a rear view of the abrasive tip according to this embodiment. Fig. 7 is a plan view of the abrasive tip according to this embodiment. Fig. 8 is a bottom view of the abrasive tip according to this embodiment. Fig. 9 is an enlarged left side view showing an end portion of the abrasive tip according to this embodiment in detail. Fig. 10 is an enlarged front view showing the end portion of the abrasive tip according to this embodiment in detail.

As shown in any one of Figs. 1 to 10, an abrasive tip 1 according to the present invention is detachably attached to an end of a handpiece of a dental ultrasonic scaler or a dental air scaler (not shown) and is used for grinding a tip (such as a scaling tip or a root planing tip) or a curette mainly used for removing calculus from root areas of teeth or areas that are difficult to brush, and includes a shaft 2 and a flat plate 3 extending (formed) continuously from a first end (distal end) of the shaft 2.

The shaft 2 includes a large-diameter section 4 provided at a second end (base end) thereof, and a small-diameter section 5 provided at the first end and extending continuously from the large-diameter section 4. The large-diameter section 4 and the small-diameter section 5 are connected via an arc-shaped section 6. Wrench flats 7 to be used for rotating the entire abrasive tip 1 when attaching or detaching the abrasive tip 1 to or from the end of the handpiece of the dental ultrasonic scaler or the dental air scaler are provided (formed) at a first end (distal end) of the large-diameter section 4 located near the arc-shaped section 6. A second end (base end) of the large-diameter section 4 is provided with a female threaded portion 8 that is to be screwed onto a male threaded portion provided at the end of the handpiece of the dental ultrasonic scaler or the dental air scaler.

The flat plate 3 is formed of a plate-like member whose thickness gradually increases from a first end (distal end) toward a second end (base end), and includes a top surface 9, a bottom surface 10, two side surfaces 11, and a front surface (end surface) 12. The top surface 9 and the bottom surface 10 are flat surfaces that are rectangular in plan view. The side surfaces 11 are rounded (curved) surfaces that are substantially isosceles-triangle shaped (or substantially isosceles-trapezoid shaped) in plan view. The front surface 12 is a rounded (curved) surface that protrudes outward.

The shaft 2 and the flat plate 3 are connected (joined or combined) to each other via a connection section 13 such that the center line (longitudinal axis) of the shaft 2 and the center line (longitudinal axis) of the flat plate 3 intersect to form a predetermined angle (e.g., 120 degrees). An abrasive (e.g., diamond) with a grit size of about #300 to #1500 is attached (fixed) over the entirety of the top surface 9, the bottom surface 10, the two side surfaces 11, and the front surface 12 by electrodeposition or sintering. Areas excluding the abrasive, that is, the shaft 2, the flat plate 3, and the connection section 13, are composed of stainless steel. The shaft 2, the flat plate 3, and the connection section 13 are formed as a single unit.

When sharpening (grinding) a tip or a curette, the abrasive tip 1 according to this embodiment is attached to the end of the handpiece of the dental ultrasonic scaler and is vibrated at a frequency of about 30,000 Hz in (substantially) a normal direction to the top surface 9 and the bottom surface 10 of the flat plate 3, or is attached to the end of the handpiece of the dental air scaler and is vibrated at a frequency of about 5,000 Hz in (substantially) the normal direction to the top surface 9 and the bottom surface 10 of the flat plate 3.
Consequently, by simply pressing the top surface 9, the bottom surface 10, the side surfaces 11, or the front surface 12 of the vibrating flat plate 3 against the tip or the curette, or by simply pressing the tip or the curette against the top surface 9, the bottom surface 10, the side surfaces 11, or the front surface 12 of the vibrating flat plate 3, the tip or the curette can be readily sharpened by anyone without requiring skill gained through experience.

Furthermore, because the flat plate 3 is formed such that the thickness thereof gradually decreases from the second end (base end) toward the first end (distal end), the amplitude of vibration can be increased in (substantially) the normal direction to the top surface 9 and the bottom surface 10 of the flat plate 3, thereby improving the grinding rate and the working efficiency.
Furthermore, because the side surfaces 11 and the front surface 12 of the flat plate 3 are rounded surfaces (curved surfaces), the tip or the curette can be readily sharpened by slightly tilting the handpiece of the dental ultrasonic scaler or the dental air scaler or by slightly tilting the tip or the curette, thereby improving the workability and the working efficiency.

Furthermore, because the shaft 2 and the flat plate 3 are connected (joined or combined) to each other such that the front surface 12 of the flat plate 3 extends away from the shaft 2 and that the center line (longitudinal axis) of the shaft 2 and the center line (longitudinal axis) of the flat plate 3 intersect to form an obtuse angle (e.g., 120 degrees), the tip or the curette can be readily sharpened by slightly tilting the handpiece of the dental ultrasonic scaler or the dental air scaler or by slightly tilting the tip or the curette, thereby improving the workability and the working efficiency. Furthermore, by using diamond, which has the highest hardness, for the abrasive, the grinding rate and the working efficiency can be improved.

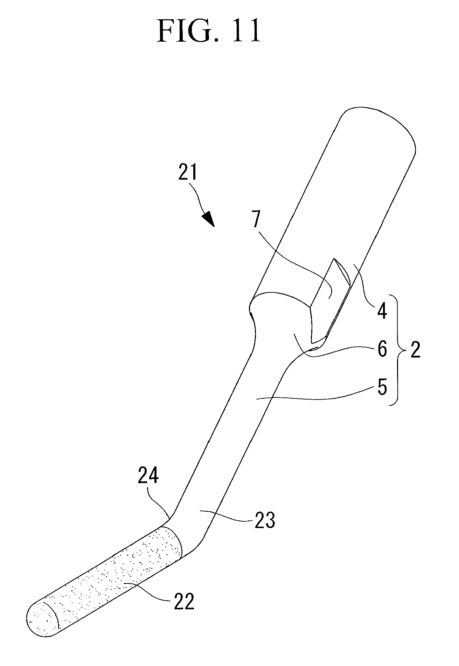

The present invention is not to be limited to the above embodiment, and appropriate modifications are permissible so long as they do not depart from the spirit of the invention.
For example, as shown in Fig. 11, an abrasive tip 21 that includes a (solid) columnar section 22 in place of the flat plate 3, and a connection section 23 in place of the connection section 13 is also permissible. Specifically, the columnar section 22 has the same outer diameter as the small-diameter section 5 and has an abrasive (e.g., diamond) with a grit size of about #300 to #1500 attached (fixed) to the entire surface thereof (i.e., a columnar outer surface (outer peripheral surface) and a hemispherical end surface) by electrodeposition or sintering. The connection section 23 connects (joins or combines) the shaft 2 to the columnar section 22 such that the center line (longitudinal axis) of the shaft 2 and the center line (longitudinal axis) of the columnar section 22 intersect to form a predetermined angle (e.g., 120 degrees).
With such an abrasive tip 21, the columnar section 22, prior to having the abrasive (e.g., diamond) attached (fixed) thereto by electrodeposition or sintering, can be readily fabricated by simply bending the end of the small-diameter section 5, thereby improving the productivity and allowing for mass production.
Since other advantages are the same as those in the above embodiment, descriptions thereof will be omitted here.
Although the outer diameter of the small-diameter section 5 is the same as the outer diameter of the columnar section 22, it may alternatively be smaller or larger than the outer diameter of the columnar section 22.

Furthermore, although the second end (base end) of the large-diameter section 4 is provided with the female threaded portion 8 in the above embodiments, the second end (base end) of the large-diameter section 4 may alternatively be provided with a male threaded portion if a female threaded portion is provided at the end of the handpiece of the dental ultrasonic scaler or the dental air scaler.

Furthermore, although diamond grains are best suited for the abrasive, abrasives formed of materials other than diamond may be employed where necessary.
Furthermore, although the abrasive used generally has a grit size of about #300 to #1500, abrasives with other grit sizes may be used as an alternative.

Furthermore, although the abrasive is provided over the entirety of the top surface 9, the bottom surface 10, the two side surfaces 11, and the front surface 12 or over the entire surface (i.e., the columnar outer surface (outer peripheral surface) and the hemispherical end surface) of the small-diameter section 5 in the above embodiments, the abrasive does not necessarily need to be provided over the entirety of the top surface 9, the bottom surface 10, the two side surfaces 11, and the front surface 12 or over the entire surface of the small-diameter section 5. Moreover, in addition to providing the abrasive over the entirety of the top surface 9, the bottom surface 10, the two side surfaces 11, and the front surface 12 or over the entire surface of the small-diameter section 5, the abrasive may be provided partially (or entirely) over the outer surface (i.e., outer peripheral surface) of the connection section 13 or 23.

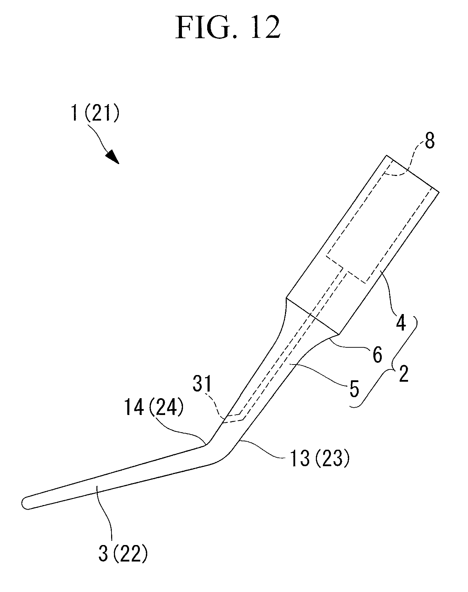

Furthermore, it is more preferable that at least one hole 31 (e.g., a hole with a diameter of 0.4 mm) (see Fig. 12) for ejecting (discharging) a cooling medium (such as water or air) supplied via the handpiece of the dental ultrasonic scaler or the dental air scaler be provided in an intermediate area, in the width direction of the connection section 13, located away from a boundary (bent section) 14 (see Figs. 1, 3, 4, and 12), located between the flat plate 3 and the connection section 13 at the front-surface side, by a predetermined distance (e.g., 1 mm) toward the small-diameter section 5, and an intermediate area, in the width direction of the connection section 13, located away from a boundary (bent section) 24 (see Figs. 11 and 12), located between the columnar section 22 and the connection section 23 at the front-surface side, by a predetermined distance (e.g., 1 mm) toward the small-diameter section 5.
Consequently, a temperature increase in the abrasive tip 1 during the grinding process can be suppressed.

## Claims

1. An abrasive tip comprising:
a shaft that is detachably attached to an end of a handpiece of a dental ultrasonic scaler or a dental air scaler; and
a flat plate extending continuously from an end of the shaft and having a top surface, a bottom surface, two side surfaces, and a front surface,
wherein an abrasive is fixed to the top surface, the bottom surface, the two side surfaces, and the front surface by electrodeposition or sintering.

2. The abrasive tip according to Claim 1, wherein the flat plate has a thickness that gradually decreases from a base end toward a distal end.

3. The abrasive tip according to Claim 1 or 2, wherein the side surfaces and the front surface are curved surfaces.

4. The abrasive tip according to any one of Claims 1 to 3, wherein the shaft and the flat plate are connected to each other such that the front surface extends away from the shaft and such that a longitudinal axis of the shaft and a longitudinal axis of the flat plate intersect to form an obtuse angle.

5. The abrasive tip according to any one of Claims 1 to 4, wherein a hole for discharging a cooling medium supplied via the handpiece of the dental ultrasonic scaler is provided in an intermediate area, in a width direction of a connection section that connects the shaft and the flat plate, located away from a boundary between the connection section and the flat plate by a predetermined distance toward the shaft.

6. An abrasive tip comprising:
a shaft that is detachably attached to an end of a handpiece of a dental ultrasonic scaler or a dental air scaler and that includes a large-diameter section located at a base end and a small-diameter section located at a distal end and extending continuously from the large-diameter section; and
a columnar section extending continuously from the distal end of the shaft,
wherein an abrasive is fixed to a surface of the columnar section by electrodeposition or sintering.

7. The abrasive tip according to Claim 6, wherein the shaft and the columnar section are connected to each other such that a distal end of the columnar section extends away from the shaft and such that a longitudinal axis of the shaft and a longitudinal axis of the columnar section intersect to form an obtuse angle.

8. The abrasive tip according to Claim 6 or 7, wherein an outer diameter of the small-diameter section is the same as an outer diameter of the columnar section.

9. The abrasive tip according to any one of Claims 6 to 8, wherein a hole for discharging a cooling medium supplied via the handpiece of the dental ultrasonic scaler is provided in an intermediate area, in a width direction of a connection section that connects the shaft and the columnar section, located away from a boundary between the connection section and the columnar section by a predetermined distance toward the shaft.

10. A dental ultrasonic scaler comprising the abrasive tip according to any one of Claims 1 to 9.

11. A dental air scaler comprising the abrasive tip according to any one of Claims 1 to 9.
